(19)

Europäisches
Patentamt
European
Patent Office
Office européen
des brevets

(11) **EP 3 656 485 A1**

(12) **EUROPEAN PATENT APPLICATION**

(43) Date of publication:
**27.05.2020 Bulletin 2020/22**

(21) Application number: **18208106.7**

(22) Date of filing: **23.11.2018**

(51) Int Cl.:
*B22D 41/12* (2006.01)      *B22D 47/00* (2006.01)
*C21C 5/28* (2006.01)      *F27D 21/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Prakash Mathur, Tarun**
**560037 Bangalore (IN)**

• **Nandwana, Anurag**
**560067 Bangalore (IN)**
• **KC, Praveen**
**560015 Bangalore (IN)**
• **C, Vinod**
**560048 Bangalore (IN)**

(74) Representative: **Zimmermann & Partner**
**Patentanwälte mbB**
**Postfach 330 920**
**80069 München (DE)**

(54) **A METHOD AND SYSTEM FOR MONITORING AND TRANSPORTING LADLES IN A METALLURGICAL FACILITY**

(57)      A control system and method for monitoring location of a ladle in a metallurgical facility (100). The Control System uses an imaging unit along with first set of sensors present on the transfer cars and second set of sensors present on the cranes to track the movement of ladles. A thermal heat model using parameters of the molten metal, properties of the ladle and time elapsed in transportation of ladle from one end to the other end of the track estimates the amount of heat lost in the ladle. The real time tracking of ladles and Crane job scheduling enables the Ladle transfer time to be minimized and avoid heat loss.

Figure 1

## Description

## BACKGROUND OF THE INVENTION

Integrated steel plants are large throughput industries producing liquid melt and solidified products using primary raw materials like iron ore. The integrated steel plant/ metallurgical facility (100) comprises various processing units/ processing plants. Each unit is configured for a specific type of processing. For example, a blast furnace converts iron oxides into liquid iron by heating and reducing the iron oxides. The Iron ore gets transformed into liquid iron and is tapped from a blast furnace. The liquid iron is passed through various processing units in a steel melt shop before it is converted into a liquid melt of steel. The liquid melt obtained from a converter in steel melt shop area after the various processing steps is at a very high temperature of around 1600 °C. In a caster, the steel melt or molten metal is molded to specific shapes. For continuous casting, the liquid melt of steel has to be transported from the converters to the casters. Usually, transfer cars and cranes are used for transporting the molten metal from the converters to the casters. The molten metals are poured into ladles and the ladles are placed in the transfer cars to be taken to further processing units.

The ladles transportation and related thermal loss is of prime importance so that the melt reaches at the right temperature at the caster to ensure the desired metallurgical properties of the final product. The cranes carrying ladles are mostly manually synchronized for ladles movements and also the thermal aspects of the ladle and melt are decided in Ladle furnace area based on prior experience and standard operating procedures. Monitoring of ladles will positively impact crane movement to optimize the ladle movement within the steel melt shop as well as it will help in deciding the correct heating amount to be done in ladle furnaces, the preceding processing unit before the caster.

Conventionally, the ladles are monitored using Radio Frequency Identification (RFID) and sensors alike. However due to the high temperature even on the outside surface of the ladle and environmental conditions in the steel melt shop, the RFID tags often break down and require frequent replacement. The frequent replacement of the RFID tags leads to increased cost and affects the monitoring process. Moreover, RFID based trackers rely on receivers and are often restricted by range of the receivers. Therefore, the ladles are not always within the range of the receiver.

Only tracking ladles is not sufficient but also to schedule the crane movements for pick up and drop of ladles as well as reducing the thermal energy spent on overheating the ladles in absence of non-visibility of ladles and their schedule. During transportation of the ladles, energy of the molten metal is reduced in the form of heat loss. The molten metal has to be maintained at particular temperature range before being casted. Often times, operators heat the melt little higher to compensate for the waiting times and related thermal loss of the ladles. Sometimes, the molten metal has to be reheated and then the molten metal is provided to the caster. All these cases result in higher energy consumption. Thus, there is a need to address the above problems.

## SUMMARY OF THE INVENTION

The present invention discloses a method and a control system for monitoring location of a ladle in a metallurgical facility (100). The ladle carries molten metal from a first processing unit to a second processing unit via a transport means comprising one or more transfer cars and one or more cranes. The control system comprises of an imaging unit and a process control unit. The imaging unit captures one or more images of the ladle. It is positioned adjacent to a track provided for each transfer car and proximate to the first processing unit. The transfer car is configured to transport the ladle from a first end of the track proximate to the first processing unit, to a second end of the track. The process control unit configured to receive a one or more images of the ladle from the imaging unit and determine an identity of the ladle using the one or more images. It then associates the identity of the ladle with an identity of a transfer car. Further it is configured to receive sensor data related to position of the transfer car periodically from first set of sensors provided in the transfer car for monitoring the location of the ladle during transportation of the ladle from the first end of the track to the second end of the track. At the second end of the track a crane among the one or more cranes is operated to transport the ladle from the second end of the track to the second processing unit. The process control unit is configured to detect a transfer of the ladle from the transfer car to the crane based on sensor data related to a loading arm of the crane received from the second set of sensors provided in the crane. It also receives the position of the crane periodically from the second set of sensors in the cranes to monitor the location of the crane transporting the ladle to the second processing unit.

In another embodiment the method and system for estimation of heat loss in the ladle is disclosed. The process control unit estimates the amount of heat-loss in the ladle by using parameters of the molten metal, properties of the ladle, thermal history of the ladle from previous circulations and the time taken for the transfer car to transport the ladle from first one position to another.

In another embodiment the system and method for scheduling the crane is disclosed. The process control unit receives sensor data related to position and loading arm of each of the cranes from the second set of sensors provided in the cranes. It receives sensor data related to status of the second processing unit received from a third set of sensors associated with the second processing unit. In the final step the process control unit identifies a crane amongst the one or more cranes for transporting the ladle from the transfer car to one of the second processing unit and the third processing unit based on the estimated amount of heat-loss in the ladle and the sensor data related to status of the second processing unit.

## BRIEF DESCRIPTION OF THE DRAWINGS

Fig. 1 is a simplified diagram illustrating the metallurgical facility (100), in accordance with an embodiment of the present disclosure.

Fig. 2 is a simplified flow-chart illustrating the method of monitoring the ladle, in accordance with an embodiment of the present disclosure.

Fig. 3 is a simplified flow-chart illustrating the method for estimating the heat-loss in the ladle, in accordance with an embodiment of the present disclosure.

Fig. 4 is a simplified flow-chart illustrating the method to the schedule the crane, in accordance with an embodiment of the present disclosure.

Fig. 5 is a simplified mapping of the cranes and the ladles in the x-y co-ordinate system.

## DETAILED DESCRIPTION OF THE INVENTION

The Figures illustrate an embodiment of a metallurgical facility (100) wherein a method and a control system for monitoring location of a ladle are depicted. Based on the foregoing, it is to be generally understood that the nomenclature and terms used herein is convenient to describe the invention given the broadest meaning to one skilled in the art.

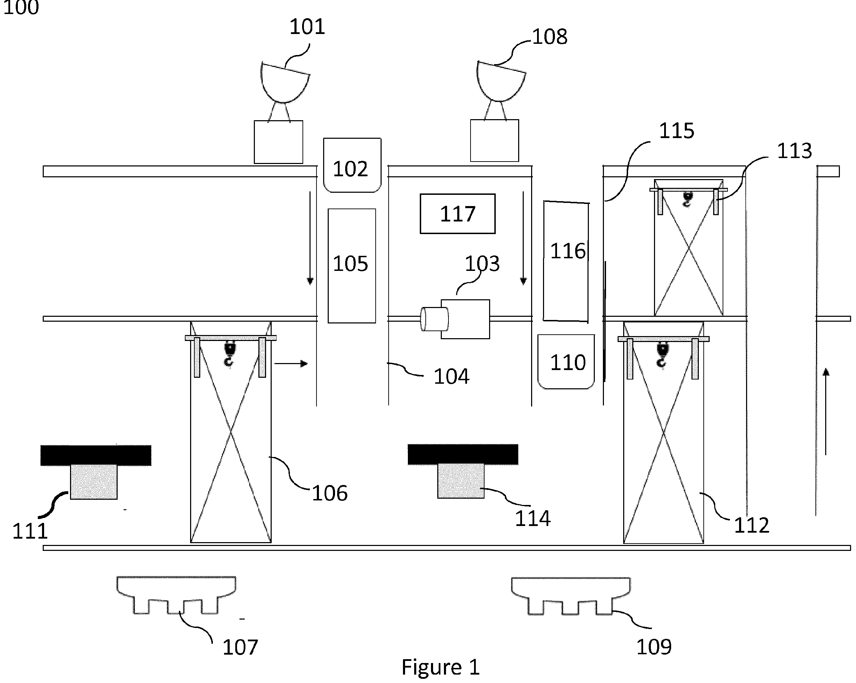

Referring to FIG. 1, shows a simplified diagram of a metallurgical facility (100) (100). The metallurgical facility (100) comprises of a control system, converters (101,108), casters (107,109), blast furnaces (111,114), ladles (102,110), one or more transfer cars (105,116) that move on a track (104,115) provided in the metallurgical facility (100), one or more cranes (106,112,113). The control system includes but is not limited to an imaging unit (103) and a process control unit (117).

A converter is referred as a first processing unit (101,108) in the present disclosure. A converter is a chemical reactor that converts liquid iron into Steel. The converter therefore contains the processed motel metal and pours the processed molten metal into the ladles, for example ladles (102,110). Each ladle is placed on their respective transfer cars. For example, the ladle 102 is placed on the transfer car 105 and the ladle 110 is placed on the transfer car (116). Each transfer car is configured to move over a track provided in the metallurgical facility (100). For example the transfer car (105) is configured to move on the track (104).

In an embodiment, the transfer cars can move in a first direction over the track and in a direction opposite to the first direction over the track. In an embodiment, each track (104,115) has two ends, a first end is proximate to a first processing unit and a second end is towards a second processing unit. Thus, each transfer car is configured to carry/ transfer a ladle from the first end to the second end of the track. The transfer cars are provided with a first set of sensors including, but are not limited to, an accelerometer, a temperature sensor, a position sensor for example a Global Positioning System (GPS) or a Radio Detection and Ranging (RADAR). The data provided by the sensors are referred as sensor data. For example, sensor data of the first set of sensors mean the data provided by the first set of sensors. The control system receives the sensor data related to rate of movement, temperature and position from these first set of sensors. An imaging unit (103) is placed adjacent to the track provided with each transfer car and proximate to the first processing unit for capturing the images of a ladle associated with a transfer car.

In an embodiment, the imaging unit (103) captures images of specific regions of the ladles indicative of an identity of the ladles. At the second end of the track a crane amongst the one or more cranes (106,112,113) is provided to lift the ladle from the transfer car and transport the ladle to the caster or the furnace. The crane is provided with a second set of sensors which includes, but are not limited to, the position sensor and the load sensor. The control system receives the sensor data related to position and status of a loading arm of the crane from these second set of sensors provided in the crane. The loading arm of the crane is configured to lift the ladle from the transfer cars and transport the ladle to one of the second and third processing unit.

The caster which molds the molten metal into a specific shape is referred as the second processing unit for example processing units (107,109). A type of reheating facility typically a blast furnace is referred as the third processing unit for example processing unit (108,111). In an embodiment, the crane is configured to transport the ladle to a blast furnace based on heat loss of the molten metal present in the ladle and a status of the caster. After reheating the molten metal, the crane transports the ladle from the blast furnace to the caster. A third set of sensors is associated with the caster to monitor a status of the caster. For example, the status of the caster is a "empty" or "not empty" and the like. Heat loss in the molten metal is estimated by the control unit.

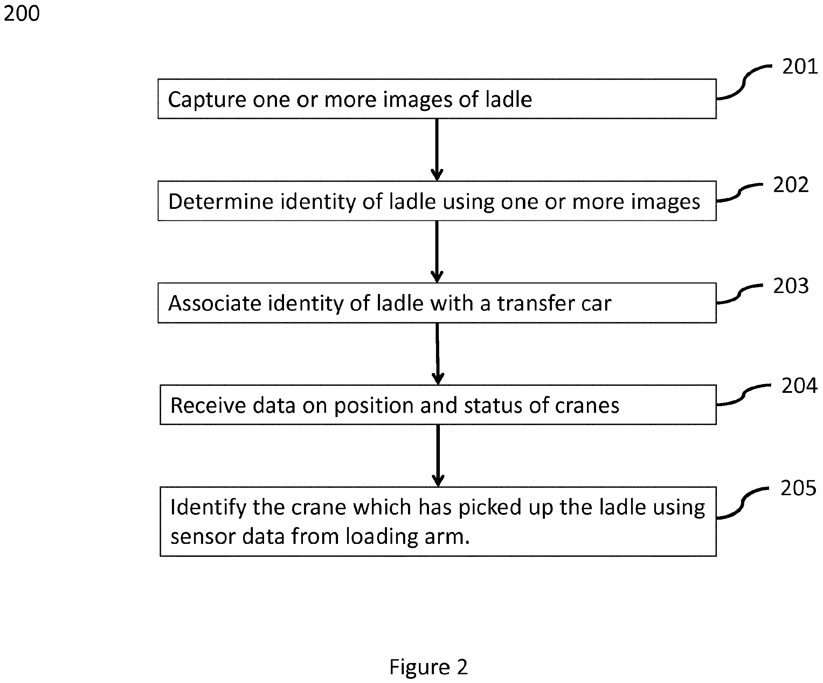

Referring to FIG. 2, a simplified method for monitoring of ladle (200) in the metallurgical facility (100) is illustrated. The ladle monitoring essentially comprises of the following steps. At step (201) the imaging unit (103) positioned adjacent to the first processing unit (101) captures one or more images of a ladle (102). At step (202) based on the images captured, an identity of the ladle is determined. At step (203) the identity of the ladle is associated with an identity of a transfer car (105). At step (204) sensor data related to position of each crane for examples cranes (106,112,113) is received. At step (205) a crane (106) is identified which has picked up the ladle based on sensor data relating to loading arm of the crane.

The method tracks the ladle movement on the basis of the movement of the transfer cars and the cranes. Since movement of the ladles in the melt shop is performed using the transfer car and cranes, the movement of ladles is estimated by tagging the transfer car and crane with ladle and tracking their movement in the metallurgical facility (100). This is further explained using figure 1. As shown in figure 1, the converters (101,108) contain the molten metal which is to be transported to the second processing unit for example casters (107,109) for casting. Further illustration is made with respect to the converter (101), ladle (102) and transfer car (105). A person skilled in the art will understand that the method steps can be applied for different elements of the metallurgical facility (100). The converter (101) pours the molten metal into ladle (102). The ladle (102) is placed in a transfer car (105) configured to move on track (104). The ladle placed in the transfer cars is has to be moved from the first processing unit to the second processing unit. At time instance $T_1$, the ladle (102) is brought to the converter (101). The converter (101) pours the molten metal into the ladle (102). In an embodiment, the control system determines that the molten metal is poured into the ladle (102) based on the sensor data (position data) received from the first set of sensors provided in the transfer cars.

An imaging unit (103) is placed adjacent to the track (104) associated with the transfer car (105). In an embodiment, the imaging unit (103) is configured to capture images of the ladles (104) placed in the transfer car (105). The control system receives the images of the ladle (102) from the imaging unit (103). An identity of the ladle (102) is determined from the images of the ladle. For example, the images of the ladle can indicate an identity number present on the ladle. In another example, a mark on the ladle can indicate the identity of the ladle. In an embodiment, the imaging unit can capture images of a particular region of the ladle to determine the identity of the ladle. The control system further determines that the identity of the ladle (102) is placed in the transfer car (105) using a mapping between an identity of the transfer car (105), an identity of the imaging unit (103) and the identity of the ladle (102). For example, the imaging unit (103) can be configured to capture images of any ladle present in the transfer car (105). When the control unit receives images of the ladle from the imaging unit (103), the control unit determines the identity of the ladle and recognizes that the ladle (102) is placed in the transfer car (105).

Subsequent to this, the ladle (102) is moved towards the second end of a track (104). The transfer car (105) includes a plurality of sensors which are associated with the control system. The control system receives the sensor data from the first set of sensors. The sensor data includes but is not limited to position of the transfer car (105). The sensor data is received at regular intervals. Thus, the control system tracks the position of the transfer car, thereby tracking position of the ladle. Further, the process control unit (117) uses the position of the transfer car (105) received at regular intervals to estimate the rate of movement of the transfer car. The rate of movement of the transfer car is used to estimate time taken ($T_n$) by the transfer car to reach the second end of the track. Thereafter, the control system schedules a crane among the one or more cranes at the second end of the track.

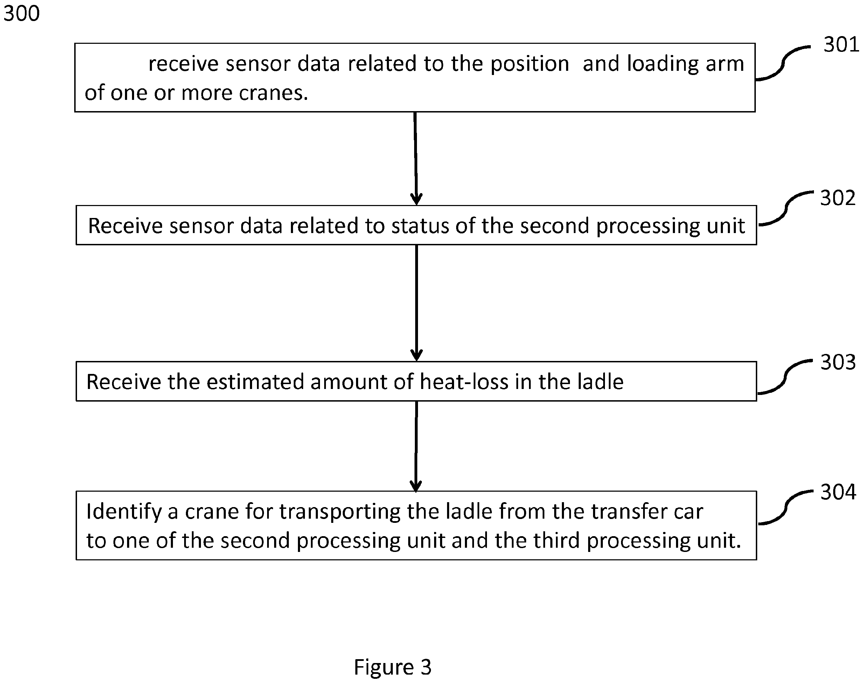

Referring to FIG. 3, a simplified method to the schedule a crane (300) is illustrated. At step (301) control system receives sensor data related to position and loading arm of each of the cranes from the second set of sensors provided in each of the cranes for example the cranes (106,112,113).

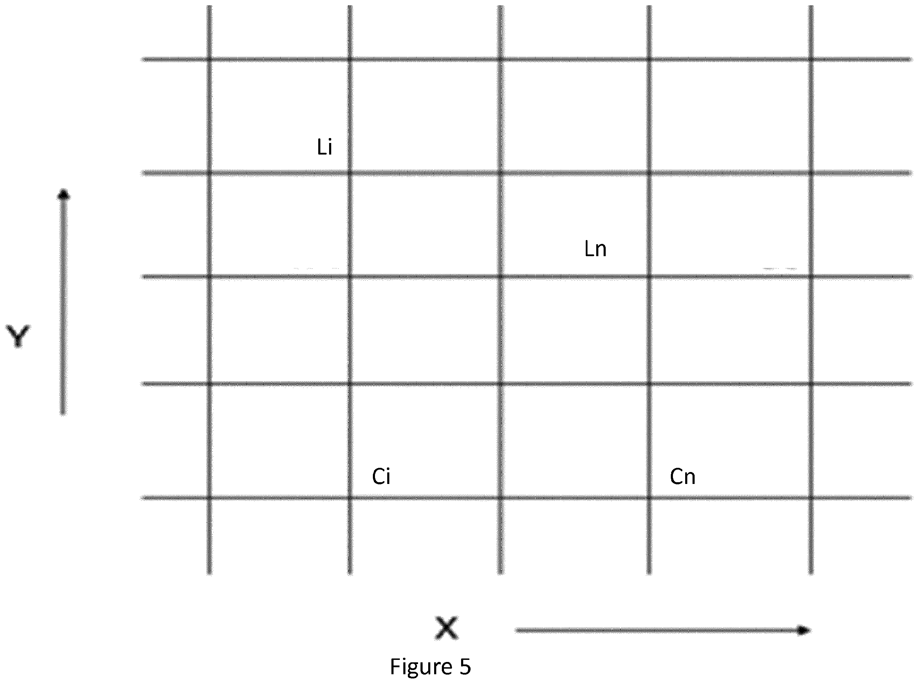

In the FIG. 5 an embodiment, the melt shop bay(s) is (are) mapped in x-y coordinate by using crane and the transfer car positions obtained from a position sensor like RADAR or GPS or any alike system provided in each of the transfer car and the cranes. The production schedule, position of the cranes, loading status of the loading arm of the cranes, and rate of movement of each of the cranes are continuously monitored by the control system. According to the aforementioned information the control system schedules a crane for transporting the ladle from the transfer car to one of the second and third processing unit. This consists of two levels of scheduling (a) long horizon scheduling (LHS) and (b) dynamic job allocation (DJA). The LHS is determined based on the planned production schedule for the entire batch of ladles. The DJA incorporates any unforeseen changes not accounted in the long horizon scheduling. For example, the DJA reschedules the next batch of ladles jobs based on any recent event like breakout, unplanned shutdown of the facility etc.

According to the mapped position of the cranes and the transfer car in the x-y co-ordinate the control system determines a crane nearest to the transfer car (105) at time instance $T_1$ (i.e. when the ladle (102) is brought proximate to the first processing unit (101) for receiving molten metal). The control system further checks the status of the loading arm of the nearest crane identified as nearest at T1. Based on above activities and the sensor data received related to position, rate of movement and status of loading arm of each of the cranes the control system identifies a crane for example crane (106) for lifting the ladle (102).

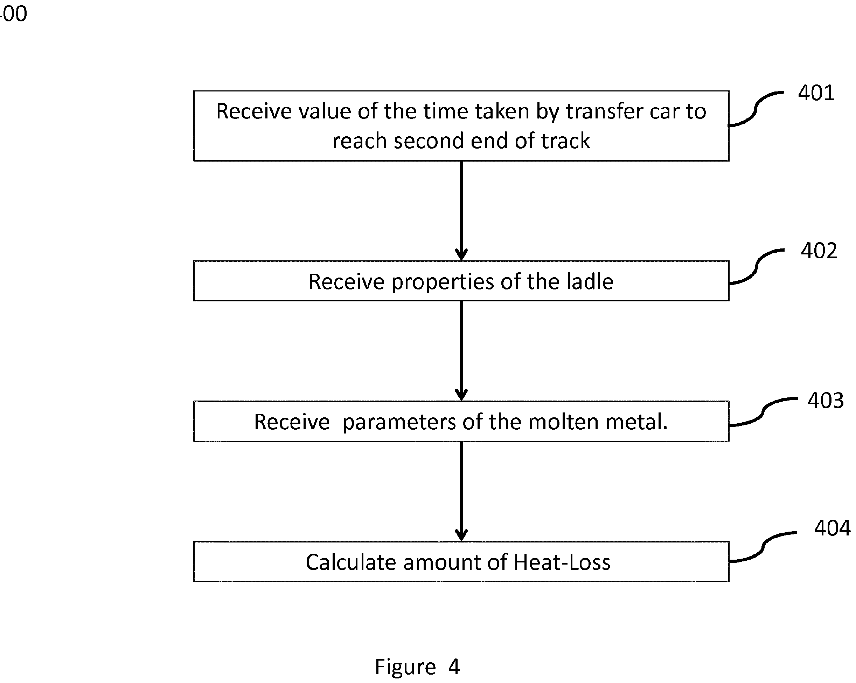

In an embodiment, the process control unit (117) also estimates amount of heat loss in the molten metal present in the ladle. Referring to FIG. 4, a simplified method for estimating heat-loss (400) in the ladle is depicted. The process control unit (117) estimates the heat loss in ladle (102) while its being transported from the first processing unit (101) to the second end of the track (104), based on 3 parameters. The first parameter is the time taken by the transfer car (105) to transport the ladle (102) from one end of the track to the second end of track referred as $T_n$. It is calculated by the process control unit (117) on the basis of rate of movement of the transfer car (105) carrying the ladle (102) and the location of the transfer car received periodically from the first set of sensors present in the transfer cars. At step (401) the process control unit (117) retrieves the value of time taken by the transfer car (105) to transport the ladle (102) from one end of the track to the second end of track referred as $T_n$. The second set of parameters are the properties of the ladle which include design of the ladle and properties of the substance used in construction of the ladle. At step (402) the process control unit (117) receives the properties of the ladle. The third set of parameters used is the properties of the molten metal present in the ladle. At step (403) the process control unit (117) receives the properties of the molten metal present in the ladle. The Control system utilizes the information about the molten metal which was previously in the converter 1 (101) and tags this information to the molten metal in Ladle 1 (102). The information includes the amount of molten metal, the composition of the molten metal and the temperature of the molten metal at which the molten metal was transferred into the ladle 1(102) at time instance T1. Following equations are used in determining the aforementioned parameters.

These equations or their modified forms are used in development of the thermal model.

$$q = \varepsilon\sigma A \left(T^4 - T_0^4\right) \text{ for radiation}$$

$$q = hA \left(T - T_0\right) \text{ for convection}$$

$$\frac{\partial T}{\partial t} = \frac{k}{\rho C_p} \frac{\partial^2 T}{\partial x^2} \text{ for conduction}$$

At step (404) the process control unit (117) using the value of parameters obtained from these equations and the Time ($T_n$) estimates the heat loss ($H_1$) in ladle while its being transported from one processing unit to the second processing unit. Subsequently, the ladle comes to the second end of the track at which the transfer car (105) stops. The control system then determines the Crane (106) has picked up the ladle based on sensor data received from loading arm of the crane (106). As shown in Figure 5 the Crane-ID (Ci) of the crane (106) which has picked ladle (102) is tagged with ladle-ID (Li) and used to indirectly track the ladle (Li) in this X-Y grid. Hence, the ladle (102) is now tagged along with crane (106) for monitoring its position.

Referring back to Figure 3 at step (302) the control system receives sensor data related to status of the second processing unit (111) from the third set of sensors associated with it. Further at step (303) the control system receives the amount of heat loss ($H_1$) as calculated previously. At step (304) the control system identifies a crane for transporting the ladle from the transfer car to one of the second processing unit and the third processing unit. If the heat-loss in the ladle is above a threshold level set in the control system, the control system schedules the crane (106) to transport the ladle (102) to the third processing unit (111) to re-heat the molten metal to the threshold level set and then transport it to the second processing unit (107). If the heat loss ($H_1$) is below the threshold level set in the control system, the control system then checks the status of the second processing unit (107). If the status of the second processing unit (107) is empty, the crane (106) transports the ladle (102) to the second processing unit (107). If the status of the second processing unit (107) is not empty the control system schedules the crane (106) to transport the ladle (102) to the third processing unit (111) to maintain the heat in the molten metal. When the status of the second processing unit (107) is indicated empty, the crane (106) is configured to transport the ladle (102) from the third processing unit (111) to the second processing unit (107). Based on the above information the crane identified for transporting the ladle transports the ladle from the transfer car to one of the second processing unit and the third processing unit.

The above disclosure has many advantages over the conventional methods of ladle monitoring in the metallurgical facility (100). Due to the use of imaging units instead of RFID tags for ladle tracking, the cost of the tracking mechanism is reduced. Since these imaging units don't require frequent replacement unlike the RFID tags the process of ladle tracking is smooth and continuous without any shut-downs. Additionally the better utilization of cranes & ladles leads to lower idle time of cranes thereby lowering the transfer time of ladles from the converter to the caster. This results in improved energy efficiency and energy conservation in the metallurgical facility (100).

REFERENCE NUMERALS

101- A Converter/First Processing unit

102- A ladle

103- Imaging unit

104- A Track

105- A transfer car

106- A crane

107- A Caster/second processing unit

108- A Converter/First Processing unit

109- A Caster/second processing unit

110- A ladle

111- A re-heating facility/third processing unit

112-A crane

113- A crane

114- A re-heating facility/third processing unit.

115- A track

116- A transfer car

117- a process control unit.

**Claims**

1.  A control system for monitoring location of a ladle in a metallurgical facility (100), wherein the ladle carries molten metal from the first processing unit to the second processing unit via a transport means comprising one or more transfer cars and one or more cranes for transporting the ladle from a first processing unit to a second processing unit, the control system comprising:

    an imaging unit for capturing one or more images of the ladle, wherein a track is provided for each transfer car and the imaging unit is positioned adjacent to the track, proximate to the first processing unit, wherein the transfer car is configured to transport the ladle from a first end of the track proximate to the first processing unit, to a second end of the track;
    a process control unit configured to:

    i. receive the one or more images of the ladle from the imaging unit;
    ii. determine an identity of the ladle using the one or more images captured;
    iii. associate the identity of the ladle with an identity of the transfer car, wherein the identity of the transfer car is determined based on the imaging unit;
    iv. receive sensor data related to position of the transfer car periodically from first set of sensors provided in the transfer car for monitoring the location of the ladle during transportation of the ladle from the first end of the track to the second end of the track, wherein a crane among the one or more cranes is operated to transport the ladle from the second end of the track to the second processing unit;
    v. detect a transfer of the ladle from the transfer car to the crane based on sensor data related to a loading arm of the crane received from the second set of sensors provided in the crane; and
    vi. receive the position of the crane periodically from the second set of sensors in the cranes to monitor the location of the ladle in the metallurgical facility (100).

2.  The control system as claimed in claim 1 wherein the process control unit is configured to estimate the time taken for the transfer car to transport the ladle from first end of the track to the second end of the track using a value of a rate of movement of the transfer car and the position of the transfer car.

3.  The control system as claimed in claim 2 wherein the process control unit is configured to estimate the amount of heat-loss in the ladle by using parameters of the molten metal, properties of the ladle and the time taken for the transfer car to transport the ladle.

4.  The control system as claimed in claim 1 wherein the process control unit is configured to schedule the crane ,the process control unit is configured to :

    a. receive sensor data related to position and loading arm of each of the cranes from the second set of sensors provided in the cranes;
    b. receive sensor data related to status of the second processing unit received from third set of sensors associated with the second processing unit.
    c. identify a crane amongst the one or more cranes for transporting the ladle from the transfer car to one of the second processing unit and the third processing unit based on the estimated amount of heat-loss in the ladle and the sensor data related to status of the second processing unit received from third set of sensors associated with the second processing

5.  A method for monitoring location of a ladle in a metallurgical facility (100), wherein the ladle carries molten metal from a first processing unit to a second processing unit via a transport means comprising one or more transfer cars and one or more cranes, the method comprising;

    a. capturing one or more images of the ladle by an imaging unit, wherein a track is provided for each transfer car and the imaging unit is positioned adjacent to the track ,proximate to the first processing unit, wherein the transfer car is configured to transport the ladle from a first end of the track proximate to the first processing unit, to a second end of the track

b. receiving the one or more images of the ladle from the imaging unit;

c. determining an identity of the ladle using the one or more images;

d. associating the identity of the ladle with an identity of the transfer car, wherein the identity of the transfer car is determined based on the imaging unit ;

e. receiving sensor data related to position of the transfer car periodically from the first set of sensors provided in the transfer car for monitoring the location of the ladle during transportation of the ladle from the first end of the track to the second end of the track, wherein a crane among the one or more cranes is operated to transport the ladle from the second end of the track to the second processing unit;

f. detecting a transfer of the ladle from the transfer car to the crane based on sensor data related to loading arm of the crane received from the second set of sensors provided in the crane, and

g. receiving the position of the crane periodically from the second set of sensors in the cranes to monitor the location of the ladle in a metallurgical facility (100).

**6.** The method as claimed in claim 5 wherein the value of the rate of movement of the transfer car and the position of the transfer car are used for estimating the time taken by the transfer car to transport the ladle from first end of the track to the second end of the track.

**7.** The method as claimed in claim 6 wherein parameters of the molten metal present in the ladle, properties of the ladle and the time taken for the transfer car to transport the ladle from first end of the track to the second end of the track along are used for estimating the amount of heat-loss in the ladle.

**8.** The method as claimed in claim 5 to schedule a crane ,the method comprising ;

a. receiving sensor data related to position and loading arm of each of the cranes from the second set of sensors provided in the cranes;

b. receiving sensor data related to status of the second processing unit received from third set of sensors associated with the second processing unit.

c. identifying a crane amongst the one or more cranes for transporting the ladle from the transfer car to one of the second processing unit and the third processing unit based on the estimated amount of heat-loss in the ladle and the sensor data related to status of the second processing unit received from third set of sensors associated with the second processing unit.

Figure 1

200

Figure 2

300

receive sensor data related to the position and loading arm of one or more cranes. — 301

Receive sensor data related to status of the second processing unit — 302

Receive the estimated amount of heat-loss in the ladle — 303

Identify a crane for transporting the ladle from the transfer car to one of the second processing unit and the third processing unit. — 304

Figure 3

EP 3 656 485 A1

```
┌─────────────────────────────────────────────┐
│  Receive value of the time taken by transfer │ ⟍── 401
│  car to reach second end of track            │
└─────────────────────────────────────────────┘
                      │
                      ▼
┌─────────────────────────────────────────────┐
│  Receive properties of the ladle             │ ⟍── 402
└─────────────────────────────────────────────┘
                      │
                      ▼
┌─────────────────────────────────────────────┐
│  Receive  parameters of the molten metal.    │ ⟍── 403
└─────────────────────────────────────────────┘
                      │
                      ▼
┌─────────────────────────────────────────────┐
│  Calculate amount of Heat-Loss               │ ⟍── 404
└─────────────────────────────────────────────┘
```

Figure 4

EP 3 656 485 A1

Figure 5

EP 3 656 485 A1

**Europäisches Patentamt**
**European Patent Office**
**Office européen des brevets**

# EUROPEAN SEARCH REPORT

Application Number

EP 18 20 8106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 000 901 A1 (PRIMETALS TECHNOLOGIES AUSTRIA GMBH [AT]) 30 March 2016 (2016-03-30) * the whole document * ----- | 1-8 | INV. B22D41/12 B22D47/00 C21C5/28 F27D21/00 |
| A | EP 3 021 255 A1 (PRIMETALS TECHNOLOGIES AUSTRIA GMBH [AT]) 18 May 2016 (2016-05-18) * the whole document * ----- | 1-8 | |
| A | GB 2 270 929 A (KYOEI STEEL CO LTD [JP]) 30 March 1994 (1994-03-30) * the whole document * ----- | 1-8 | |

| | |
|---|---|
| | **TECHNICAL FIELDS SEARCHED (IPC)** |
| | B22D C21C C21B F27D |

The present search report has been drawn up for all claims

| Place of search | Date of completion of the search | Examiner |
|---|---|---|
| Munich | 14 March 2019 | Rischard, Marc |

EPO FORM 1503 03.82 (P04C01)

**ANNEX TO THE EUROPEAN SEARCH REPORT
ON EUROPEAN PATENT APPLICATION NO.**

EP 18 20 8106

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2019

| Patent document cited in search report | | | Publication date | Patent family member(s) | | | Publication date |
|---|---|---|---|---|---|---|---|
| EP 3000901 | A1 | | 30-03-2016 | BR | 112017005799 | A2 | 12-12-2017 |
| | | | | CN | 107075595 | A | 18-08-2017 |
| | | | | EP | 3000901 | A1 | 30-03-2016 |
| | | | | EP | 3198042 | A1 | 02-08-2017 |
| | | | | KR | 20170057294 | A | 24-05-2017 |
| | | | | WO | 2016045859 | A1 | 31-03-2016 |
| EP 3021255 | A1 | | 18-05-2016 | BR | 112017009391 | A2 | 19-12-2017 |
| | | | | CN | 107004103 | A | 01-08-2017 |
| | | | | EP | 3021255 | A1 | 18-05-2016 |
| | | | | EP | 3218841 | A1 | 20-09-2017 |
| | | | | JP | 6424279 | B2 | 14-11-2018 |
| | | | | JP | 2017537419 | A | 14-12-2017 |
| | | | | KR | 20170084135 | A | 19-07-2017 |
| | | | | US | 2018285603 | A1 | 04-10-2018 |
| | | | | WO | 2016074824 | A1 | 19-05-2016 |
| GB 2270929 | A | | 30-03-1994 | GB | 2270929 | A | 30-03-1994 |
| | | | | JP | H06145760 | A | 27-05-1994 |
| | | | | US | 5346528 | A | 13-09-1994 |

EPO FORM P0459

For more details about this annex : see Official Journal of the European Patent Office, No. 12/82